# FASCICULE DE BREVET EUROPEEN

(11) **EP 1 100 185 B1**
(45) Date de publication et mention de la délivrance du brevet: **08.01.2003**
(21) Numéro de dépôt: 00811037.1
(22) Date de dépôt: 06.11.2000
(51) Int. Cl.: H02K 15/02

(54) **Procédé de fabrication de paquets de tôles de forme annulaire**
Verfahren zum Herstellen eines ringförmigen Blechpaketes
Method of manufacture of annular shaped lamination stack

(30) Priorité: 10.11.1999 FR 9914173
(43) Date de publication de la demande: 16.05.2001
(73) Titulaire: R. BOURGEOIS (société anonyme), 25000 Besancon (FR)
(72) Inventeur: Bourgeois, Raymond, 25640 Roulans (FR)
(74) Mandataire: Kiliaridis, Constantin

(56) Documents cités:
- FR-A- 2 171 398
- US-A- 4 102 040
- US-A- 4 116 033
- US-A- 4 198 743

## Description

La présente invention concerne un procédé de fabrication de paquets de tôles de forme annulaire pour stator de machines électriques à partir de tôles étampées selon les étapes suivantes : on découpe par étampage des segments rectilignes de tôles, d'une longueur égale à la longueur de la périphérie du paquet annulaire à former, chaque segment se présentant sous la forme d'une bande dont les dents ont la forme de la section radiale des pièces polaires du stator, et le côté opposé aux dents présente des encoches situées dans le prolongement des dents, on empile les segments pour former un paquet d'une hauteur prédéterminée et on les assemble par au moins deux cordons de soudure au laser ou au plasma dans deux cannelures formées par les encoches. L'invention concerne également une installation pour la mise en oeuvre du procédé.

Il est connu pour la construction de stators de petites et moyennes machines électriques et notamment des alternateurs de voitures automobiles, de former des paquets d'anneaux découpés par étampage dans des tôles magnétiques ou autres et de les assembler par rivetage ou soudage.

Les anneaux découpés présentent vers l'intérieur des fentes ouvertes formées par des bras dirigés radialement vers l'intérieur et qui formeront dans le paquet les pièces polaires du stator. Le découpage par étampage d'un anneau entier présente quelques inconvénients : la quantité de déchets est importante car la partie de la tôle correspondant au diamètre intérieur de l'anneau ne peut être utilisée que pour la formation d'un anneau de diamètre inférieur et ceci pour autant que l'épaisseur de la tôle, ainsi que le diamètre, correspondent aux caractéristiques techniques requises. D'autre part, il y aussi une grande quantité de déchets de tôles correspondant à la partie de la tôle qui se trouve à l'extérieur du diamètre de l'anneau.

La construction des anneaux ne permet pas de respecter les tolérances de forme requise et les dimensions exactes aussi bien des anneaux que des paquets des anneaux à cause des tensions internes créées lors de l'étampage, lesquelles ne peuvent pas être éliminées facilement à cause de la forme fermée de l'anneau. Ces tensions internes ont une influence sur les tolérances de grandeur de diamètres intérieurs et extérieurs des anneaux et sur le parallélisme de deux faces d'un paquet de tôles. Souvent, il est nécessaire d'effectuer un usinage supplémentaire du stator avant de pouvoir respecter les tolérances requises.

On a proposé dans le EP-B-136 740 du déposant un procédé et une installation pour la fabrication de paquets de tôles à partir de segments d'anneaux, notamment des segments d'anneaux à 120°, sans que ceci soit une valeur limitative.

Ce procédé et dispositif donnent satisfaction et permettent d'économiser, d'une part, sur les déchets de tôles puisqu'on ne découpe que des segments d'anneaux et, d'autre part, de mieux respecter la géométrie du paquet en éliminant les tensions internes créées lors de l'étampage d'un anneau fermé.

Le US-A-4,102,040 propose un procédé de fabrication consistant, selon une variante, de courber le paquet de tôles formé en le faisant épouser la surface latérale d'un tambour en une opération continue. Lorsque les deux extrémités du paquet se rejoignent, on le maintient par un dispositif de liaison et ensuite on procède au soudage.

Le US-A-4,198,743 décrit une méthode permettant, selon une variante, la formation d'un noyau magnétique en forme de C en immobilisant le milieu d'un paquet de tôles et en appliquant au moyen de deux outils de saisie simultanés à partir du centre des efforts continus permettant d'obtenir la forme en C.

La présente invention a pour but de proposer un nouveau procédé pour la fabrication de paquets de tôles pour les stators de machines électriques permettant notamment de diminuer considérablement les déchets dus à cette fabrication et simplifier l'installation de mise en oeuvre.

Le procédé selon la présente invention est caractérisé par la combinaison des étapes suivantes :
on maintient le paquet serré entre une surface plate s'appuyant sur la surface du paquet avec les cannelures sur environ la moitié de la longueur du segment laissant libre environ ¼ de la longueur totale à chaque extrémité et des moyens s'appuyant sur la face avec les pièces polaires,
on précourbe au moyen d'une presse à coulisseaux multiples les deux extrémités sur environ la moitié de leurs parties libres pour former sur chacune un arc d'environ 40° en appliquant une pression sur leurs surfaces cannelées correspondantes, contre des poinçons de forme correspondante,
on courbe au moyen d'une presse à coulisseaux multiples les deux extrémités libres sur la totalité de leur parties libres en arc de cercle de 90° en appliquant une pression sur la surface cannelée des deux extrémités, contre des poinçons de forme correspondante,
on libère le paquet et on le maintient uniquement le long de deux arêtes, l'une sur la face intérieure et l'autre sur la face extérieure du paquet correspondant aux points milieux des segments,
on applique une pression sur les parties arquées du paquet jusqu'à ce que le cylindre soit fermé,
on soude au laser ou plasma les extrémités réunies formant ainsi une pièce cylindrique.

Les avantages du procédé selon l'invention sont le fait que l'on procède à la formation de l'anneau de manière séquentielle ce qui permet une meilleure cylindricité par le fait que les fibres du métal se détendent entre deux étapes. D'autre part, la machine utilisée est une machine à coulisseaux multiples qui existe depuis longtemps. On a seulement dû la faire évoluer pour la mise en oeuvre du procédé. Il n'y a pratiquement pas de correction de la cylindricité à faire après la soudure des extrémités du paquet plié.

Selon une variante préférée de l'invention, sur une bande de tôle, on découpe deux segments situés dos à dos et décalés d'une distance égale à la moitié de la distance -entre deux pièces polaires, permettant ainsi de limiter à un minimum les déchets de tôles qui sont pratiquement aux parties de la tôle correspondant aux espaces interpolaires.

D'autre part, il n'y a pas de tension lors de l'étampage puisque les pièces sont découpées en segments droits, ce qui évite les problèmes qu'elles peuvent créer sur la géométrie du stator.

Afin de respecter la géométrie du stator, les paquets de tôles, après leur assemblage définitif peuvent être soumis à un calibrage au moyen d'une presse hydraulique dans le cas de tolérances sévères.

Une installation de mise en oeuvre du procédé selon l'invention est également proposée.

L'installation de mise en oeuvre est caractérisé par le fait qu'elle comprend une station d'étampage de tôle pour la formation de segments rectilignes, une station d'empilage et déformation des paquets d'une hauteur prédéterminée, une station d'assemblage par l'apposition d'au moins deux cordons de soudure, d'une station de pliage sur presse à coulisseaux multiples des paquets pour former des pièces cylindriques munie également d'une station de soudure des extrémités réunies de chaque paquet, la station de pliage comprenant une première platine munie d'une surface d'appui perpendiculaire à ladite platine pour recevoir chacun des paquets et de trois coulisseaux dont un se trouve du côté présentant les dents muni d'une pièce de butée pour maintenir le paquet contre ladite surface d'appui et deux poinçons et deux coulisseaux situés sur le côté opposé muni chacun d'une matrice pour s'appuyer sur les extrémités du paquet et les précourber sur environ 40° contre les poinçons du premier coulisseau, d'une deuxième platine parallèle à la première et présentant trois coulisseaux disposés comme ceux de la première platine, les deux coulisseaux agissant sur la surface extérieure du paquet présentant des matrices ayant une surface concave d'environ ¼ de cylindre pour pousser les extrémités précourbées du paquet contre es poinçons correspondant du coulisseau opposé jusqu'à un arc de cercle de 90°, d'une troisième platine munie d'une surface d'appui pour recevoir la partie encore plane du paquet précédemment courbé d'un coulisseau muni d'une surface de butée pour maintenir ce paquet contre ladite surface plate et deux coulisseaux se faisant face de part et d'autre des parties courbées à 90° du paquet munis de matrices présentant une surface cylindrique concave destinée à pousser les extrémités arquées du paquet jusqu'à la fermeture complète et la formation d'un cylindre, et d'une quatrième platine munie d'une surface d'appui sur laquelle repose le paquet par sa génératrice opposée à la génératrice selon laquelle les deux extrémités du paquet sont jointes, d'un premier coulisseau muni d'un organe permettant de maintenir le paquet contre ladite surface d'appui et de quatre coulisseaux régulièrement répartis selon une circonférence munis de quatre matrices à surfaces concaves ayant les dimensions et le rayon d'environ ¼ de cylindre permettant de maintenir fermé l'anneau ainsi formé et d'un dispositif de soudure au laser ou au plasma pour souder les extrémités jointes du paquet selon une génératrice.

Le procédé selon l'invention sera décrit à l'aide du dessin annexé.

La figure 1 représente une vue en plan d'un paquet de tôles avant le pliage.

La figure 2 est une vue schématique de l'installation complète pour la mise en oeuvre du procédé.

Les figures 3 à 6 sont des vues de face des parties de la station de pliage en quatre étapes.

Par des moyens connus, on découpe par étampage dans des bandes de tôles des segments rectilignes de tôles 1 ayant la forme d'une bande munie de dents 2 dont la forme est celle des pièces polaires du stator d'une machine électrique. Le dos du segment rectiligne présente des encoches 3 se trouvant dans le prolongement des dents 2.

Ces segments de tôles peuvent être découpés soit dans une bande représentant une largeur égale à environ la largeur de la bande, soit dans une bande qui présente le double de cette largeur, les bandes découpées étant dos à dos et présentant un décalage correspondant à la moitié de l'espace entre deux dents, ce qui limite les déchets.

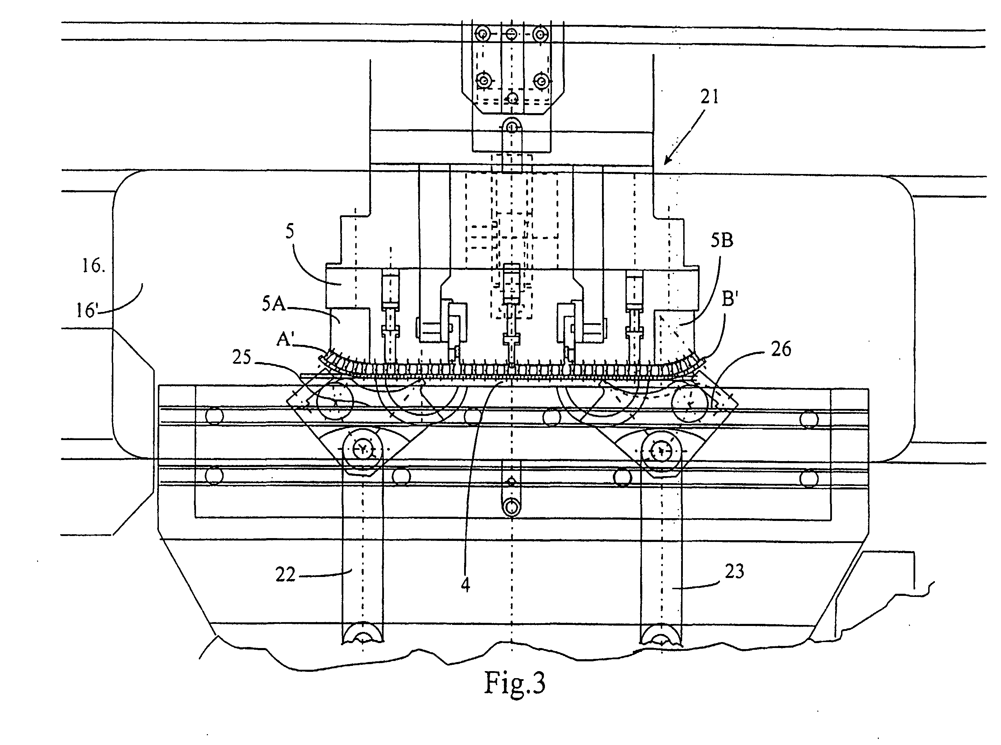

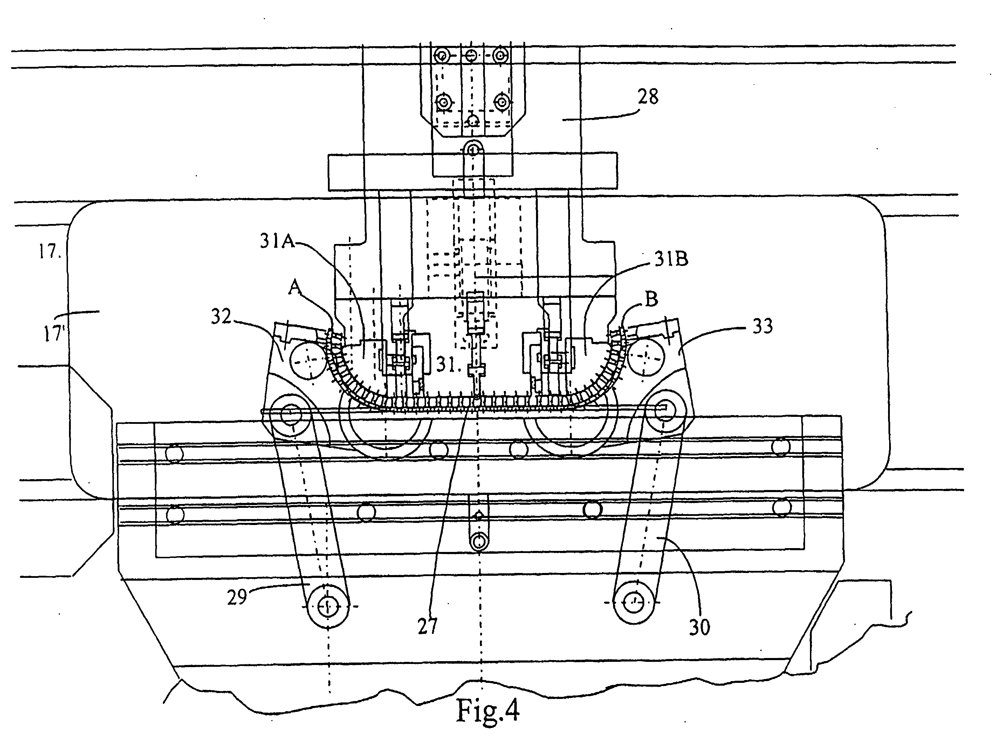

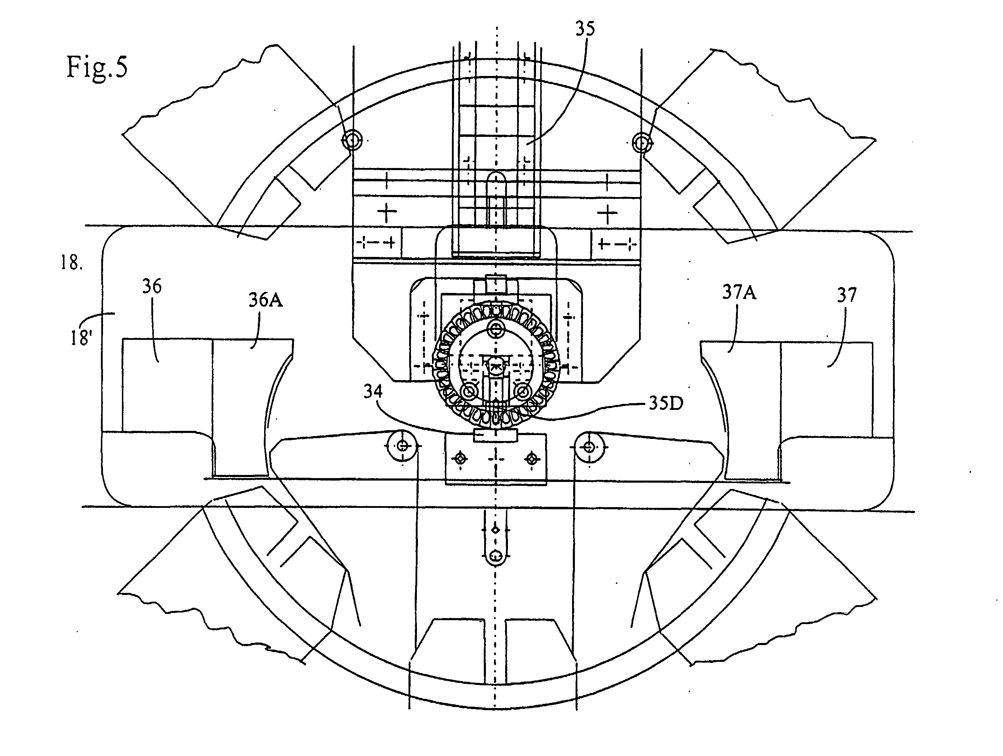

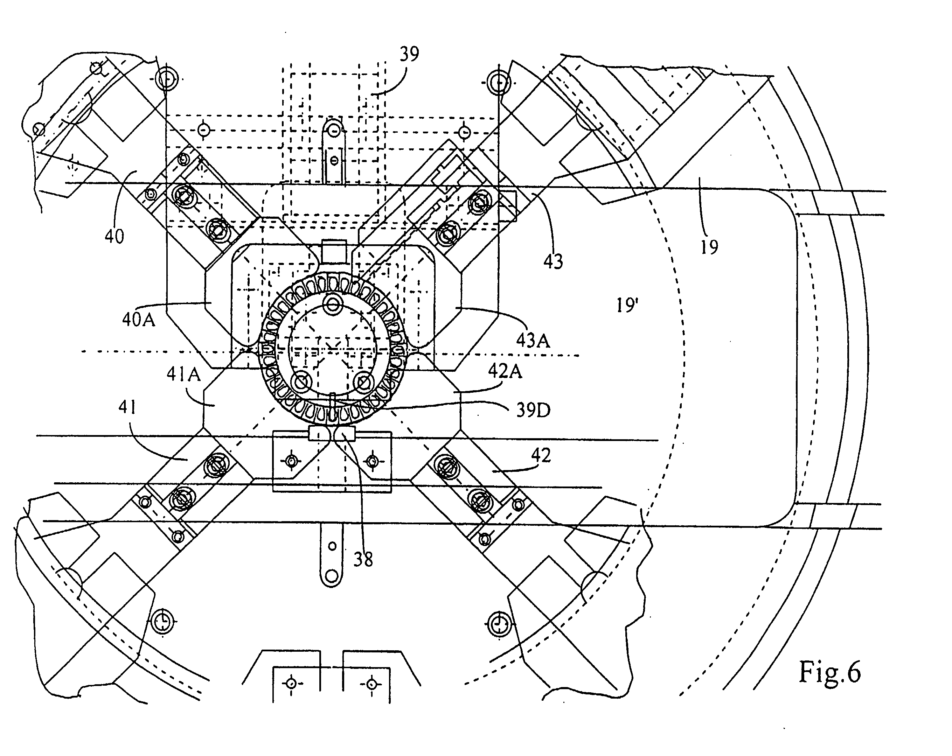

Après avoir obtenu par empilage un paquet dont la hauteur correspond à la longueur du stator, on soude les segments par au moins deux cordons de soudure qui sont situés de préférence dans des encoches 3 et on dispose le paquet sur une machine à coulisseaux multiples pour procéder à la formation du stator annulaire. Dans ce but, le paquet avec les segments 1 est posé par sa partie centrale du côté où se trouvent les encoches 3 et qui est destiné à former la surface extérieure du stator, sur une surface d'appui 4 (fig. 3), tandis qu'on maintient le paquet à l'intérieur au moyen par exemple d'un appui 5. On agit sur les deux extrémités libres du paquet qui représentent chacune environ 1/8 de la longueur du paquet et on courbe les extrémités du paquet jusqu'à la position A', B' contre des poinçons de forme correspondante formant ainsi deux arcs d'environ 40°. Ensuite (fig. 4) on courbe les extrémités sur la longueur libre (soit ¼ de la longueur du paquet) pour former un arc A, B d'environ 90° contre d'autres poinçons. Ensuite, on maintient le paquet par deux arrêtes opposées (fig. 5, 6) et on agit sur les extrémités du paquet pour obtenir la fermeture complète de l'anneau. Lorsque la fermeture de l'anneau est obtenue un cordon de soudure au laser ou au plasma est appliqué aux extrémités assurant la fermeture de l'anneau et le stator est ainsi formé.

Enfin, le stator est mis dans une presse hydraulique de calibrage pour permettre d'assurer sa géométrie du stator définitive.

Les encoches 3 se trouvant à la surface extérieure des segments permettent d'obtenir la formation de l'anneau plus facilement que si la surface extérieure était continue.

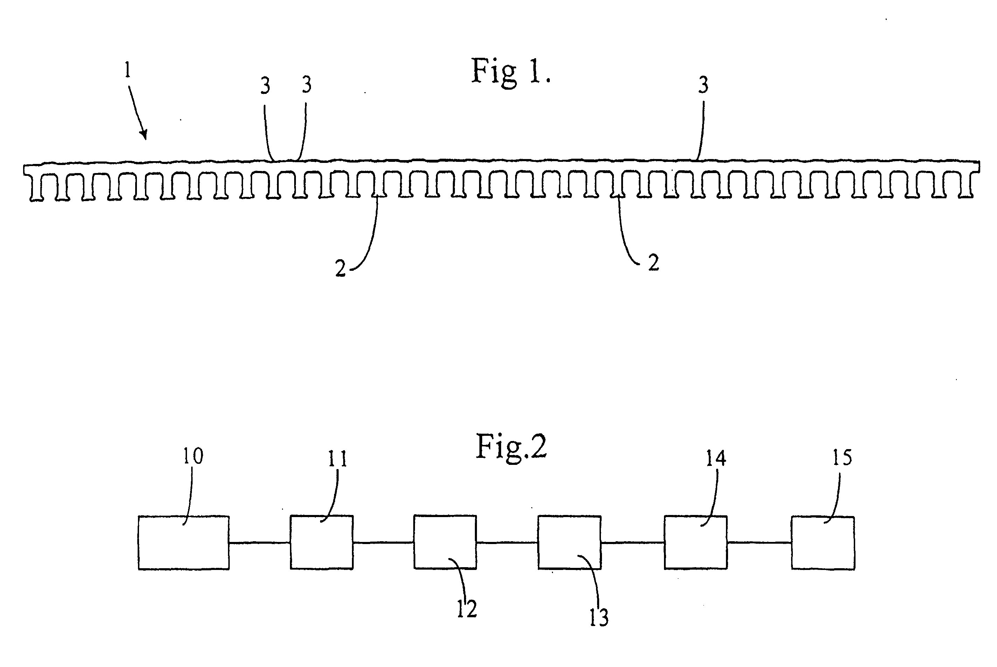

En se référant à la figure 2, nous avons représenté, d'une manière schématique, les postes principaux d'une installation de mise en oeuvre du procédé. Un premier poste 10 d'étampage permet à partir d'une tôle de découper des segments ayant la forme telle que représentée à la figure 1. Ensuite on passe à un poste 11 d'empilage pour la formation des paquets d'une hauteur prédéterminée. Ensuite on passe à un poste de soudure 12 permettant d'apposer au moins deux cordons de soudure pour maintenir les éléments de chaque paquet entre eux, enfin on passe à un poste 13 qui forme le stator. Ce poste 13 sera explicitement décrit aux figures 3 à 6. A la sortie du stator formé au poste 13, les paquets passent dans une presse de calibrage 14 pour assurer la bonne géométrie intérieure et extérieure du paquet et enfin les paquets passent à une station d'emballage 15.

Ces différents postes ont été succinctement désignés mais bien entendu chacun comprend des dispositifs permettant d'effectuer également certaines autres opérations, par exemple au poste d'empilage 11 on peut associer une station de pesage qui permet de contrôler par le poids si le stator comprend le poids de métal spécifié et, le cas échéant, ajouter des segments pour le compléter. On peut prévoir aussi après la soudure un refroidissement des paquets avant de passer à l'étape suivante. Néanmoins, ce type d'installations ne fait pas l'objet de la présente invention, l'invention porte surtout sur la mise en oeuvre par coulisseaux multiples du procédé concernant plus spécifiquement le pliage des paquets pour former un stator tel qu'il sera décrit aux figures 3 à 6.

Pour le pliage, un paquet de tôles assemblées, est posé sur sa face opposée à celle des pièces polaires, on fait traverser le paquet par pas successifs dans une presse à coulisseaux multiples. En principe ce pliage et la fermeture définitive du stator se fait en quatre étapes successives, le paquet se déplaçant chaque fois parallèlement à une direction et plus précisément perpendiculairement à des platines (disposées en principe verticalement) supportant des coulisseaux. La machine comprend quatre platines 16, 17, 18 et 19 (fig. 3, 4, 5, 6) qui sont disposées l'une derrière l'autre et sont chacune munie d'un trou central rectangulaire 16', 17', 18' 19' qui permet de faire passer les paquets d'une platine à l'autre.

La première platine 16 comprend une surface d'appui 4 sur laquelle va reposer le paquet et trois coulisseaux 21, 22, 23, le coulisseau 21 se trouvant du côté opposé par rapport à la surface d'appui est muni d'une surface de butée 5 par laquelle le paquet est maintenu sur la surface d'appui 4 en laissant de part et d'autre à peu près au moins un quart de la longueur de chaque paquet. Les deux coulisseaux 22 et 23 se trouvent du côté opposés et sont chacun muni d'une matrice 25, 26 présentant une surface ayant approximativement une section en forme de S, laquelle va glisser et s'appuyer sur les extrémités libres du paquet pour exercer une pression et former aux deux extrémités respectivement un arc d'environ 40° en appuyant lesdites extrémités contre des poinçons 5A, 5B.

Par la suite, le paquet va traverser cette platine 16 par le trou 16' pour arriver à la platine 17 représentée à la figure 4 qui est également munie d'une surface d'appui 27 et trois coulisseaux 28, 29 et 30 disposés pratiquement de la même manière que les coulisseaux de la platine 16. Le coulisseau 28 est également muni d'une surface de butée 31 par laquelle le paquet partiellement courbé est maintenu contre la surface d'appui 27.

Si la longueur des bandes fermant les paquets est relativement grande on peut avoir recours à deux coulisseaux pour maintenir les paquets contre les surfaces d'appuis concernant les deux étapes précédentes.

Les deux coulisseaux 29 et 30 comprennent également à leurs extrémités deux matrices 32 et 33 concaves articulées par une extrémité sur le coulisseau et par lequel ils vont en s'appuyant sur les extrémités précourbées du paquet et les déformer jusqu'à former environ un arc de 90° comme représenté sur la figure 4, en s'appuyant sur des poinçons correspondants 31A, 31B.

Par la suite, en traversant le trou 17', le paquet va venir vers la platine 18 qui est également munie d'une surface d'appui 34 et trois coulisseaux 35, 36 et 37. Le coulisseau 35 est muni cette fois d'une surface d'appui qui est un doigt 35D venant s'appuyer entre deux dents polaires pour serrer le paquet contre la surface d'appui 34. Les deux coulisseaux latéraux 36 et 37 sont également muni chacun d'une matrice concave 36A, 37A pour pousser les extrémités courbées du paquet jusqu'à ce que le paquet forme un cylindre.

Après avoir formé le paquet de cette manière, le paquet passe vers la platine 19 à travers le trou 19' et vient s'appuyer sur une surface d'appui 38 un coulisseau 39 similaire au coulisseau 35 maintient le cylindre contre la surface d'appui 38 par un doigt 39D tandis que quatre coulisseaux 40, 41, 42 et 43 régulièrement répartis sur la surface de la platine 19 et muni chacun d'une matrice concave, 40A, 41A, 42A, 43A dont la forme correspond à peu prêt à un quart de cylindre, viennent serrer le paquet pour le maintenir fermé dans sa position définitive tandis qu'une machine de soudure au laser ou au plasma non représentée applique un cordon de soudure aux extrémités jointes du paquet. A partir de cet instant, le paquet part à travers le trou 18' pour passer dans une presse de calibrage pour assurer sa géométrie avant de subir un refroidissement afin d'éliminer les tensions dues au cordon de soudure.

L'utilisation de coulisseaux pour la déformation d'un paquet de tôle et la formation d'un stator présente l'avantage de pouvoir adapter la machine facilement aux différentes dimensions de la production désirée. Dans les deux premières platines 16 et 17 les supports de coulisseaux sont maintenus chacun dans deux guides linéaires et parallèles tandis que sur les platines 18 et 19 les guides sont deux cercles concentriques qui permettent de modifier la position des supports de coulisseaux en fonction des besoins et les dimensions du stator à former.

Il est évident que les platines 16 et 17 peuvent être des plaques séparées ou les deux faces d'une même plaque puisque sur une plaque 16 on peut très bien disposer d'un côté les coulisseaux 21, 22, 23 et de l'autre les coulisseaux 28, 29 et 30 et de même sur les platine 18 et 19 peuvent être soit des plaques séparées ou les deux faces d'une même plaque. De même, les surfaces d'appui 4, 27, 34, 38 peuvent être d'une seule pièce qui traverse ces platines dont la section transversale tout au long de l'avancement diminue car lors de deux premières étapes le paquet repose sur des surfaces larges tandis qu'à la fin il doit reposer pratiquement sur une génératrice.

## Revendications

1. Procédé de fabrication de paquets de tôles de forme annulaire pour le stator de machines électriques, à partir de tôles étampées, selon les étapes suivantes :
on découpe par étampage des segments rectilignes de tôles (1), d'une longueur égale à la longueur de la périphérie du paquet annulaire à former, chaque segment se présentant sous la forme d'une bande munie de dents (2) ayant la forme de la section radiale des pièces polaires du stator, et dont le côté opposé aux dents présente des encoches (3) situées dans le prolongement des dents,
on empile les segments (1) pour former un paquet d'une hauteur prédéterminée et on les assemble par au moins deux cordons de soudure au laser ou au plasma dans deux cannelures formées par les encoches (3), **caractérisé par** la combinaison des étapes suivantes :
on maintient le paquet serré entre une surface plate (4) s'appuyant sur la surface du paquet avec les cannelures sur environ la moitié de la longueur du segment laissant libre environ ¼ de la longueur totale à chaque extrémité et des moyens (5) s'appuyant sur la face avec les pièces polaires,
on précourbe au moyen d'une presse à coulisseaux multiples (21,22,23) les deux extrémités sur environ la moitié de leurs parties libres pour former sur chacune un arc d'environ 40° en appliquant une pression sur leurs surfaces cannelées correspondantes contre des poinçons (5A, 5B) de forme correspondante,
on courbe les deux extrémités libres sur la totalité de leur parties libres en arc de cercle de 90° en appliquant une pression sur la surface cannelée des deux extrémités contre des poinçons (31A, 31B) de forme correspondante,
on libère le paquet et on le maintient uniquement le long de deux arêtes, l'une sur la face intérieure et l'autre sur la face extérieure du paquet correspondant aux points milieux des segments,
on applique une pression au moyen d'une presse à coulisseaux multiples sur les parties arquées du paquet jusqu'à ce que le cylindre soit fermé,
on soude au laser ou au plasma les extrémités réunies formant ainsi une pièce cylindrique.

2. Procédé selon la revendication 1, **caractérisé par le fait que** les segments (1) sont découpés sur des bobines de tôles d'une largeur égale à environ deux fois la largeur de deux segments à découper, l'étampage se faisant de sorte à obtenir deux segments dos à dos décalés d'une distance égale à la moitié de la distance entre deux pièces polaires.

3. Procédé selon l'une des revendications 1 à 2, **caractérisé par le fait que** le paquet est soumis à calibrage (14) sur une presse hydraulique pour le conformer aux caractéristiques géométriques désirées.

4. Installation pour la mise en oeuvre du procédé selon l'une des revendication 1 à 3, **caractérisée par le fait qu'**elle comprend une station d'étampage de tôle (10) pour la formation de segments de bandes rectilignes (1), une station d'empilage (11) et déformation des paquets d'une hauteur prédéterminée, une station d'assemblage (12) par l'apposition d'au moins deux cordons de soudure, d'une station de pliage (13) sur presse à coulisseaux multiples des paquets pour former des pièces cylindriques munie également d'une station de soudure des extrémités réunies de chaque paquet, la station de pliage comprenant une première platine (16) munie d'une surface d'appui (4) perpendiculaire à ladite platine pour recevoir chacun des paquets et de trois coulisseaux (21,22,23) dont un se trouve du côté présentant les dents, muni d'une pièce de butée (5) pour maintenir le paquet contre ladite surface d'appui et de deux poinçons (5A,5B) et deux coulisseaux situés sur le côté opposé muni chacun d'une matrice pour s'appuyer sur les extrémités du paquet et les précourber sur environ 40° contre les poinçons du premier coulisseau, d'une deuxième platine (17) parallèle à la première et présentant trois coulisseaux (28,29,30) disposés comme ceux de la première platine, les deux coulisseaux agissant sur la surface extérieure du paquet présentant des matrices ayant une surface concave d'environ ¼ de cylindre pour pousser les extrémités précourbées du paquet jusqu'à un arc de cercle de 90° contre des poinçons correspondants du coulisseau opposé, d'une troisième platine (18) munie d'une surface d'appui pour recevoir la partie encore plane du paquet précédemment courbé d'un coulisseau muni d'une surface de butée pour maintenir ce paquet contre ladite surface plate et deux coulisseaux se faisant face de part et d'autre des parties courbées à 90° du paquet munis de matrices présentant une surface cylindrique concave destinée à pousser les extrémités arquées du paquet jusqu'à la fermeture complète et la formation d'un cylindre, et d'une quatrième platine (19) munie d'une surface d'appui sur laquelle repose le paquet par sa génératrice opposée à la génératrice selon laquelle les deux extrémités du paquet sont jointes, d'un premier coulisseau (39) muni d'un organe permettant de maintenir le paquet contre ladite surface d'appui et de quatre coulisseaux (40,41,42,43) regulièrement répartis selon une circonférence munis de quatre matrices à surface concaves ayant les dimensions et le rayon d'environ ¼ de cylindre permettant de maintenir fermé l'anneau ainsi formé et d'un dispositif de soudure pour souder les extrémités jointes du paquet selon une génératrice.

5. Installation selon la revendication 4, **caractérisée par le fait que** les deux premières platines se trouvent sur deux faces opposées d'une première plaque et les deux dernières se trouvent sur les deux faces d'une deuxième plaque, les deux plaques étant disposées parallèlement et leurs parties centrales présentent un évidemment (17') permettant au paquet de passer d'une platine à l'autre en traversant les plaques selon une direction perpendiculaire auxdites plaques.

6. Installation selon l'une des revendications 4 ou 5, **caractérisée par le fait qu'**elle comprend une presse hydraulique de calibrage (14) pour s'assurer de la bonne géométrie des paquets après conformation sur la presse à coulisseaux multiples.

## Claims

1. A method for the manufacture of bundles of metal sheets of annular shape for the stator of electric machines from stamped sheets according to the following steps:
cutting out rectilinear sheet segments (1) by stamping, with a length equal to the length of the periphery of the annular bundle to be formed, each segment taking the shape of a band, provided with teeth (2) having the shape of the radial cross section of the pole pieces of the stator and the side of which opposite the teeth has notches (3) arranged in the extension of the teeth,
stacking the segments (1) to form a bundle of predetermined height and assembling the segments by means of at least two laser-welding or plasma-welding beads in two grooves formed by the notches, **characterized by** the combination of the following steps:
holding the bundle gripped between a flat surface (4) bearing on the bundle surface having the grooves, over approximately half the length of the segment, leaving free approximately one quarter of the total length at each end, and means (5) bearing on the face having the pole pieces,
prebending the two ends by means of a multiple-slide (21, 22, 23) press over approximately half of their free parts, so as to form, on each of them, an arc of approximately 40°, by pressure being applied to their corresponding grooved surfaces, against punches (5A, 5B) of corresponding shape,
bending the two free ends over the entirety of their free parts in a 90° arc of a circle, by pressure being applied to the grooved surface of the two ends against punches (31A, 31B) of corresponding shape,
releasing the bundle and holding at solely along two edges, one on the inner face and the other on the outer face of the bundle, corresponding to the midpoints of the segments,
applying pressure by means of a multiple-slide press to the arcuate parts of the bundle until the cylinder is closed,
laser-welding or plasma-welding the joined ends, thus forming a cylindrical component.

2. The method as claimed in claim 1, wherein the segments (1) are cut out from sheet metal coils of a width equal to approximately twice the width of two segments to be cut, stamping being carried out so as to obtain two segments back to back, offset at a distance equal to half the distance between two pole pieces.

3. The method as claimed in one of claims 1 and 2, wherein the bundle is subjected to calibration (14) on a hydraulic press in order to shape it to the desired geometric characteristics.

4. A plant for carrying out the method as claimed in one of claims 1 to 3, **characterized in that** it comprises a sheet metal stamping station (10) for the formation of rectilinear band segments (1), a station for stacking (11) and deforming the bundles with a predetermined height, a station for assembling (12) by the affixation of at least two welding beads, and a station for folding (13) the bundles on a multiple-slide press to form cylindrical components, said installation likewise being provided with a station for welding the joined ends of each bundle, the folding station comprising a first plate (16) provided with a bearing surface (4) perpendicular to said plate, for receiving each of the bundles, and with three slides (21, 22, 23), one of which is located on the side having the teeth and is provided with a stop piece (5) for holding the bundle against said bearing surface and with two punches (5A, 5B) and two slides located on the opposite side, each provided with a die for bearing on the ends of the bundle and for prebending them over approximately 40° against the punches of the first slide, with a second plate (7) parallel to the first and having three slides (28, 29, 30) arranged in the same way as those of the first plate, the two slides acting on the outer surface of the bundle having dies with a surface concave over approximately a quarter of a cylinder, in order to push the prebent ends of the bundle into an arc of a circle of 90° against corresponding punches of the opposite slide, with a third plate (18) provided with a bearing surface for receiving the still planar part of the previously bent bundle, with a slide provided with a stop surface for holding this bundle against said flat surface and two slides facing one another on either side of the 90°-bent parts of the bundle and provided with dies having a concave cylindrical surface intended for pushing the arcuate ends of the bundle up to complete closure and the formation of a cylinder, and with a fourth plate (19) provided with a bearing surface, on which the bundle rests with its generatrix opposite the generatrix along which the two ends of the bundle are joined, with a first slide (39) provided with a member making it possible to hold the bundle against said bearing surface and with four slides (40, 41, 42, 43) uniformly distributed along a circumference and provided with four dies with
concave surfaces having the dimensions and the radius of approximately a quarter of a cylinder, making it possible to keep the ring thus formed closed, and with a welding device for welding the joined ends of the bundle along a generatrix.

5. The plant as claimed in claim 4, wherein the first two plates are located on two opposite faces of a first board and the last two plates are located on the two faces of a second board, the two boards being arranged parallel and their central parts having a recess (17') making it possible for the bundle to pass from one plate to the other by passing through the boards in a direction perpendicular to said boards.

6. The plant as claimed in claim 4 or 5, wherein it comprises a hydraulic calibrating press (14) for ensuring the accurate geometry of the bundles after shaping on the multiple-slide press.

## Patentansprüche

1. Verfahren zur Herstellung eines ringförmigen Blechpakets aus gestanzten Blechen für den Ständer einer elektrischen Maschine, gemäss folgenden Schritten:
Man schneidet durch Stanzen geradlinige Blechsegmente (1), deren Länge gleich der Länge des Umfangs des zu bildenden ringförmigen Pakets ist, wobei jedes Segment die Form eines Bandes hat, das mit Zähnen (2) versehen ist, welche die Form des radialen Querschnitts der Polstücke des Ständers haben und deren den Zähnen gegenüberliegende Seite Nuten (3) aufweist, die in der Verlängerung der Zähne liegen,
man stapelt die Segmente (1) aufeinander, um ein Paket vorbestimmter Höhe zu bilden, und man verbindet sie durch wenigstens zwei Schweissnähte, welche in zwei durch die Nuten (3) gebildeten Rillen verlaufen und mittels Laser- oder Plasmaschweissung hergestellt werden, **gekennzeichnet durch** die Kombination folgender Schritte:
Man hält das Paket zwischen einer ebenen Oberfläche (4), die sich auf der die Rillen aufweisenden Paketoberfläche auf ungefähr der Hälfte der Segmentlänge abstützt und ungefähr ein Viertel der Gesamtlänge an jedem Ende freilässt, sowie Mitteln (5) gepresst, die sich auf der die Polstücke aufweisenden Seite abstützen,
man erzeugt mittels einer mehrere Pressenstössel (21, 22, 23) aufweisenden Presse eine Vorkrümmung der beiden Enden über ungefähr die Hälfte ihrer freien Teile, um an jedem Ende einen Bogen von ungefähr 40° zu bilden, indem ihre entsprechenden gerillten Oberflächen gegen entsprechend geformte Biegestempel (5) gepresst werden,
man biegt die beiden freien Enden über die Gesamtheit ihrer freien Teile zu einem Kreisbogen von 90°, indem die gerillte Oberfläche der beiden Ende gegen entsprechend geformte Biegestempel (31A, 31B) gepresst werden,
man gibt das Paket frei und hält es nur längs zweier Kanten, und zwar einer auf der Innenseite und einer anderen auf der Aussenseite des Pakets, entsprechend den Mittelpunkten der Segmente.
man presst die gebogenen Paketteile mittels einer mehrere Pressenstössel aufweisenden Presse, bis der Zylinder geschlossen ist, und
man schweisst die vereinigten Enden mittels Laser- oder Plasmaschweissung und bildet so ein zylindrisches Teil.

2. Verfahren nach Anspruch 1, **dadurch gekennzeichnet, dass** die Segmente (1) auf Blechrollen gestanzt werden, deren Breite ungefähr gleich der doppelten Breite zweier zu stanzender Segmente ist, wobei das Stanzen so erfolgt, dass man zwei Segmente Rücken an Rücken erhält, die um einen Abstand versetzt sind, der gleich der Hälfte des Abstands zwischen zwei Polstücken ist.

3. Verfahren nach einem der Ansprüche 1 oder 2, **dadurch gekennzeichnet, dass** das Paket auf einer hydraulischen Presse einer Kalibrierung unterworfen wird, um es den gewünschten geometrischen Eigenschaften anzupassen.

4. Vorrichtung zur Durchführung des Verfahrens nach einem der Ansprüche 1 bis 3, **dadurch gekennzeichnet, dass** sie folgende Stationen aufweist: Eine Blechstanzstation (10) zur Bildung geradliniger Bandsegmente (1), eine Stapelstation (11) zum Stapeln und Verformen von Pakete mit einer vorbestimmten Höhe, eine Station (12) zum Zusammenfügen durch Anbringen wenigstens zweier Schweissnähte, eine Biegestation (13) zum Biegen der Pakete auf einer mehrere Pressenstössel aufweisenden Presse zwecks Bildung zylindrischer Teile, welche auch mit einer Station zum Schweissen der vereinigten Enden jedes Pakets ausgerüstet ist, wobei die Biegestation folgende Komponenten aufweist: Eine erste Platine (16), die eine senkrecht zu dieser orientierte Anlagefläche (4) zur Aufnahme jedes der Pakete und drei Pressenstössel (21, 22, 23) aufweist, von denen einer an der die Zähne aufweisenden Seite liegt und mit einem Anschlagteil (5) zum Halten des Pakets gegen die erwähnte Anlagefläche, und mit zwei Stempeln (5A, 5B) versehen ist, und von denen zwei Pressenstössel auf der gegenüberliegenden Seite angeordnet sind und jeder mit einer Matrize versehen ist, die dazu bestimmt ist, sich auf den Paketenden abzustützen und diese durch Anpressung gegen die Stempel des ersten Pressenstössels um ungefähr 40° vorzukrümmen, eine zweite, parallel zur ersten Platine angeordnete Platine (17), die drei Pressensstössel (28, 29, 30) aufweist, welche wie die der ersten Platine angeordnet sind, wobei die zwei Pressenstössel auf die äussere Fläche des Pakets wirken und Matrizen mit einer konkaven, sich über ungefähr ¼ des Zylinders erstreckende Oberfläche aufweisen, um die vorgekrümmten Enden des Pakets zu einem Kreisbogen von 90° gegen die entsprechenden Stempel des gegenüberliegenden Pressenstössels zu biegen, eine dritte Platine (18), die mit einer Anlagefläche zur Aufnahme des noch ebenen Teils des zuvor gebogenen Pakets und mit einem eine Anschlagfläche aufweisenden Pressenstössel versehen ist, um dieses Paket gegen die erwähnte ebene Oberfläche und zwei Pressenstössel zu halten, die auf beiden Seiten den um 90° gebogenen Teilen des Pakets gegenüberliegen und mit Matrizen versehen sind, die eine konkave zylindrische Oberfläche haben, die dazu bestimmt ist, die gebogenen Enden des Pakets bis zum vollständigen Schliessen und zur Bildung eines Zylinders zu drücken, sowie eine vierte Platine (19) mit einer Anlagefläche, auf welcher das Paket mit seiner Mantelfläche ruht, die derjenigen Mantelfläche gegenüberliegt, längs derer die beiden Enden des Pakets verbunden sind, mit einem ersten Pressenstössel (39), versehen mit einem Organ, welches das Paket gegen die erwähnte Anlagefläche zu halten erlaubt, und mit vier weiteren, regelmässig über einen Umfang verteilten Pressenstösseln (40, 41, 42, 43), die mit vier Matrizen versehen sind, die konkave Oberflächen haben, welche die Abmessungen und den Radius ungefähr eines Viertelzylinders aufweisen und erlauben, den so gebildeten Ring geschlossen zu halten, sowie mit einer Schweisseinrichtung zum Verschweissen der vereinigten Enden des Pakets längs einer Mantellinie.

5. Vorrichtung nach Anspruch 4, **dadurch gekennzeichnet, dass** die beiden ersten Platinen auf zwei gegenüberliegenden Seiten einer ersten Platte und die beiden letzten Platinen auf den beiden Seiten einer zweiten Platte angeordnet sind, und dass die beiden Platten parallel zueinander liegen und ihre zentralen Teile eine Ausnehmung (17') aufweisen, welche es erlaubt, dass ein Paket von einer Platine zur anderen gelangt, indem es die Platten in einer senkrecht zu diesen Platten orientierten Richtung durchquert.

6. Vorrichtung nach einem der Ansprüche 4 oder 5, **dadurch gekennzeichnet, dass** sie eine hydraulische Kalibrierungspresse (14) aufweist, um die gute Geometrie der Pakete nach der Formgebung auf der mehrere Pressenstössel aufweisenden Presse sicherzustellen.
